# EUROPEAN PATENT SPECIFICATION

(11) **EP 1 657 869 B1**
(45) Date of publication and mention of the grant of the patent: **29.10.2008**
(21) Application number: 05024430.0
(22) Date of filing: 09.11.2005
(51) Int. Cl.: H04L 12/58

(54) **Server, server system, and e-mail delivery method**
Server, Serversystem und Verfahren zur Zustellung von E-mails
Serveur, système serveur et méthode de distribution de courrier électronique

(30) Priority: 10.11.2004 JP 2004326918
(43) Date of publication of application: 17.05.2006
(73) Proprietor: NTT DoCoMo, Inc., Tokyo 100-6150 (JP)
(72) Inventor: Enatsu, Tomoko NTT DoCoMo, Inc., Chiyoda-ku Tokyo 100-6150 (JP); Kawano, Shikiko NTT DoCoMo, Inc., Chiyoda-ku Tokyo 100-6150 (JP); Sayuri, Ito NTT DoCoMo, Inc., Chiyoda-ku Tokyo 100-6150 (JP)
(74) Representative: Viering, Jentschura & Partner

(56) References cited:
- EP-A- 1 164 757
- WO-A-03/005276

## Description

### BACKGROUND OF THE INVENTION

### Field of the Invention

The present invention relates to a server, a server system, and a mail delivery method for transferring an e-mail with a file attachment to a mail server.

### Related Background of the Invention

E-mails have been and are sent with file attachments. An e-mail with a file attachment (hereinafter referred to as an "attached file") is once received by a mail server and the e-mail is transferred to an address according to a transmission destination.

It is known that when the mail server receives the e-mail with the attached file and when the transmission destination of the e-mail is a predetermined transmission destination, the attached file is stored into a directory for display of WEB instead of being stored in a mail box of the mail server, as described in Japanese Patent Application Laid-Open No. 2002-91882 (hereinafter referred to as Patent Document 1). This Patent Document 1 describes that storage is done by selectively switching between the mail box and the WEB display directory on the basis of the destination and that, in the case where the attached file is stored in the WEB display directory, an e-mail containing a URL indicating the storing directory is created and this e-mail is transmitted to the transmission destination.

Document EP-A-1 164 757 disclosed an email delivering method for a server system comprising a central server for receiving an email with a file attached thereto and for transmitting the email to a communication terminal in the web server having a storage area for storing the attached file in association with an URL.

### SUMMARY OF THE INVENTION

However, the technology described in Patent Document 1 is the technology of determining whether an e-mail is to be stored in the mail box or in the WEB display directory, based on destinations preliminarily stored, and it troubles an operator managing the mail server, to store the destinations.

E-mails are sorted through the determination on whether each e-mail is to be stored in the mail box or in the WEB display directory, based on the preliminarily stored destinations, but the foregoing technology does not concern sorting based on the size of each attached file. For example, if a communication terminal capable of receiving an e-mail with an attached file is an old model, it might not be able to receive an e-mail with an attached file over a predetermined size. However, if the communication terminal is a new model, it might be able to receive the attached file over the predetermined size. In such cases, the technology described in Patent Document 1 fails to execute the attached file sorting process to enable the receiver to securely receive the attached file. A conceivable method for permitting the receiver to securely receive the attached file, is to make the operator determine whether each destination is a communication terminal of a new model or a communication terminal of an old model, one by one, and store the pertinent destination in the mail server, but it will cause a lot of trouble.

An object of the present invention is therefore to provide a server, a server system, and an e-mail delivery method capable of processing an e-mail with an attached file while determining whether the e-mail with the attached file is to be stored in a mail box or whether only the attached file is to be stored in a storage area specified by a URL, based on a file size of the attached file, so as to enable a receiver to securely receive the e-mail, without trouble to an operator managing the server.

### Means for Solving the Problem

In order to solve the above problem, a server according to the present invention is a server comprising: receiving means for receiving an e-mail with a file attached thereto; size determining means for determining a file size of the file attached to the e-mail received by the receiving means; and controlling means for performing such control that when the size determining means determines that the file size of the file is not less than a predetermined file size, the file is stored into a storage area specified by a URL and that when the file size of the file is smaller than the predetermined file size, the e-mail with the file is stored into a storage area specified by an e-mail address.

A server system comprises a central server for receiving an e-mail with a file attached thereto and for transmitting the e-mail to a communication terminal, and a WEB server having a storage area for storing the attached file in association with a URL, wherein the central server comprises: size determining means for determining a file size of the file attached to the e-mail received; processing means for, when the size determining means determines that the file size of the file is not less than a predetermined file size, providing the e-mail with identification information indicating that the file size of the file is not less than the predetermined file size; server transmitting means for transmitting the e-mail processed by the processing means, to the WEB server; and terminal transmitting means for transmitting an e-mail returned from the WEB server, to the communication terminal, and wherein the WEB server comprises: mail determining means for determining whether an e-mail transmitted from the central server is provided with the identification information indicating that the file size is not less than the predetermined file size; extracting means for, when the mail determining means determines that the e-mail contains a file with a file size not less than the predetermined file size, extracting the file; storing means for storing the file extracted by the extracting means, in association with a URL; e-mail generating means for generating an e-mail, the one from which the file was extracted by describing the URL associated with the file in the storing means, in the e-mail transmitted from the central server; and returning means for returning the e-mail generated by the e-mail generating means, to the central server.

An e-mail delivery method for a server to deliver a received e-mail to a communication terminal, comprises: a receiving step of receiving an e-mail with a file attached thereto; a size determining step of determining a file size of the file attached to the e-mail received in the receiving step; a storing step wherein when it is determined in the size determining step that the file size of the file is not less than a predetermined file size, the file is stored into a storage area specified by a URL and wherein when it is determined that the file size of the file is smaller than the predetermined file size, the e-mail with the file is stored into a storage area specified by an e-mail address; and a delivering step of delivering the file stored in the storing step, in accordance with a request from the communication terminal, or delivering the e-mail to the communication terminal.

The present invention permits the following storage, based on the file size of the file attached to the e-mail: when the file size is smaller than the predetermined file size, the e-mail, together with the attached file, is stored as an ordinary e-mail in the storage area specified by the e-mail address, so called a mail box; when the file size is not less than the predetermined file size, the file is stored in the storage area specified by the URL. This permits the receiver to acquire the attached file with the file size that cannot be received with the e-mail, using the URL through a browser, whereby the receiver can securely acquire the attached file, without trouble to the operator managing the server.

The server has a configuration comprising mail transmitting means for transmitting the e-mail stored in the storage area specified by the e-mail address, to a destination, wherein when the receiving means receives an e-mail with a plurality of files attached thereto and when the size determining means determines that a file size of at least one file out of the plurality of files received is not less than the predetermined file size, the controlling means makes the file with the file size not less than the predetermined file size stored into a storage area specified by a URL, and the mail transmitting means transmits to the destination, information indicating the URL, along with the files other than the file with the file size not less than the predetermined file size, by the e-mail.

The present invention permits the following process: when an e-mail with a plurality of files attached is received and when it is determined that even only one file out of the plurality of files has the file size not less than the predetermined file size, it is stored in the storage area specified by the URL, whereby, even in the case where the plurality of files are attached to the e-mail, they can be stored in the storage area specified by the URL or transmitted via e-mail by the mail transmitting means, according to their file size; therefore, the attached files can be securely delivered to the destination.

The server has a configuration wherein when the size determining means determines that a plurality of files with the file size not less than the predetermined file size are attached to the e-mail received by the receiving means, the controlling means makes only one file out of the plurality of files with the file size not less than the predetermined file size, stored into a storage area specified by a URL, and deletes the other files with the file size not less than the predetermined file size from the e-mail.

Where a plurality of files are attached to the e-mail received by the receiving means, only one file is stored in the storage area specified by the URL and the other files with the file size not less than the predetermined file size are deleted; therefore, a user manipulating a communication terminal to browse the file stored in the storage area specified by the URL does not have to perform selection of the URL or the like, which improves the operability for browsing the file.

### Effect of the Invention

The present invention permits the following storage, based on the file size of the file attached to the e-mail; when the file size is smaller than the predetermined size, the e-mail, together with the attached file, is stored as an ordinary e-mail in the storage area specified by the e-mail address, so called a mail box; when the file size is not less than the predetermined size, the file is stored in the storage area specified by the URL. This permits the receiver to acquire the attached file with the file size that cannot be received with the e-mail, using the URL through the browser, whereby the receiver can securely acquire the attached file without trouble to the operator managing the server.

### BRIEF DESCRIPTION OF THE DRAWINGS

Fig. 1 is a system conceptual diagram showing a network system in which central server 100 according to an embodiment of the invention is located.

Fig. 2 is a block configuration diagram of central server 100.

Fig. 3 is an explanatory diagram showing a data format of an e-mail with a plurality of image data attached.

Fig. 4 is a flowchart showing an operation of central server 100.

Fig. 5 is a block configuration diagram of external WEB server 200.

Fig. 6 is a flowchart showing an operation of external WEB server 200.

Fig. 7 is a flowchart showing an operation of central server 100 in receiving a return mail from external WEB server 200.

Fig. 8 is an explanatory diagram showing states of e-mails with attached files.

### DESCRIPTION OF THE PREFERRED EMBODIMENTS

The present invention can be readily understood in view of the following detailed description with reference to the accompanying drawings presented for an embodiment. Subsequently, an embodiment of the present invention will be described with reference to the accompanying drawings. The same portions will be denoted by the same reference symbols as much as possible, without redundant description.

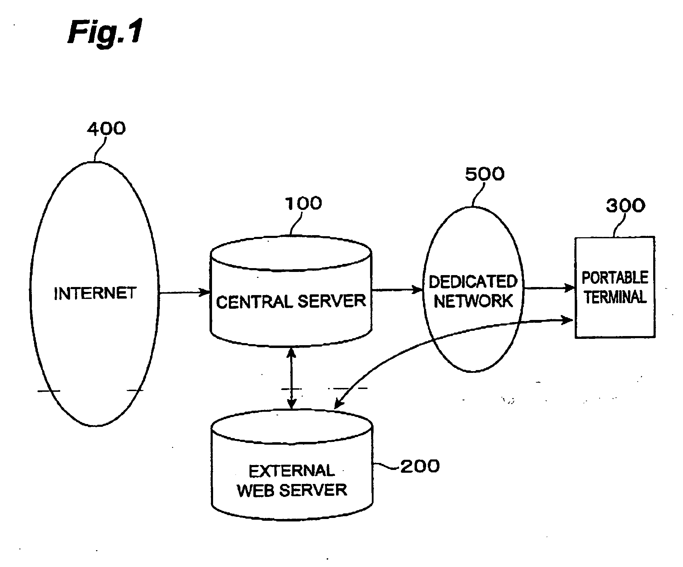

Fig. 1 is a system conceptual diagram showing a network system in which central server 100 of the present embodiment is located. As shown in Fig. 1, the central server 100 is connected in a communicable state to Internet 400, and is able to receive an e-mail with a file such as an image file via Internet 400. The central server 100 is able to deliver a received e-mail via dedicated network 500 to portable terminal 300 such as a cell phone. This dedicated network 500 is a network capable of data communication with cell phones, for example.

The central server 100 is connected to external WEB server 200 so as to be able to transmit and receive an e-mail to and from the WEB server 200. This external WEB server 200 is able to store only a file with a file size not less than a predetermined size among files attached to an e-mail transmitted from the central server 100, in association with a URL. The external WEB server 200 receives a file request based on a URL with a browser from portable terminal 300 via central server 100 and delivers a file associated with the URL in accordance with this request. For making a file request from portable terminal 300, a file request signal transmitted from the portable terminal 300 does not always have to pass the central server 100, but can be transmitted directly to the external WEB server 200.

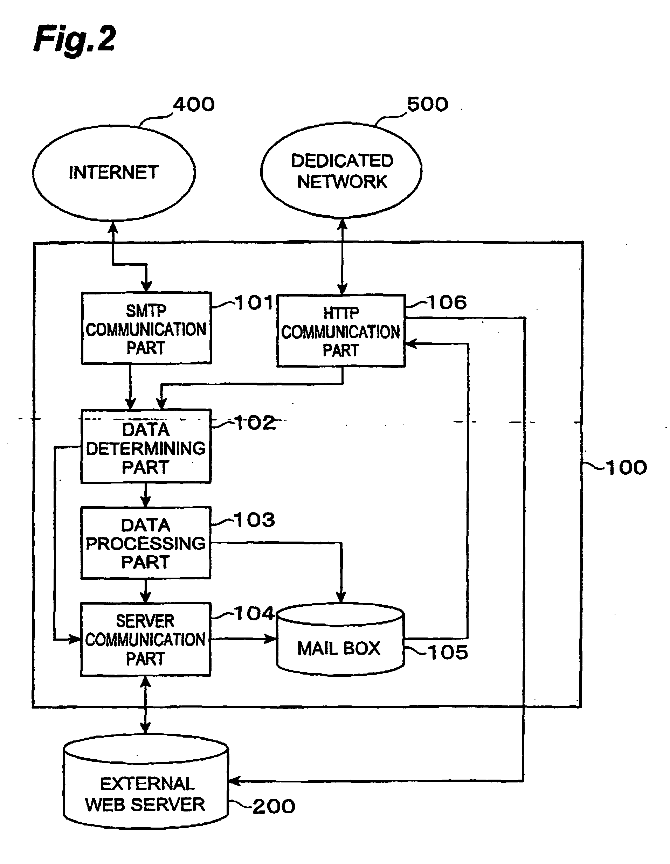

The following will describe central server 100 in the network system constructed as described above. Fig. 2 is a block configuration diagram of central server 100. The central server 100 mainly functions as a mail server, and is constructed including SMTP (Simple Mail Transfer Protocol) communication part 101 (receiving means), data determining part 102 (size determining means and controlling means), data processing part 103 (processing means), server communication part 104 (server transmitting means), mail box 105, and HTTP (Hyper Text Transfer Protocol) communication part 106 (mail transmitting means and terminal transmitting means). The central server 100 in Fig. 1 is described as one server machine, but is not limited to this form. The central server 100 may be constructed as a server system consisting of a plurality of servers. Each of the components will be described below.

The SMTP communication part 101 is a part that receives an e-mail received via the Internet. The SMTP communication part 101 is able to receive an e-mail from a communication terminal (a personal computer, a cell phone, or the like) connected to the Internet, by SMTP being a standard protocol for e-mails. The SMTP communication part 101 outputs the received e-mail to the data determining part 102.

The data determining part 102 is a part that analyzes and determines various data included in the e-mail received by the SMTP communication part 101. For example, the data determining part 102 is a part that determines whether a file such as an image file is attached to an e-mail, what is a type of a file attached (e.g., whether a JPEG file or not, whether a word processing file or not, etc.), and whether a size of a file attached is not less than a predetermined size (e.g., 10 KByte). Furthermore, the data determining part 102 is a part that determines whether a type of a terminal as a destination of an e-mail is a PDC (Personal Digital Cellular) being a normal cell phone, or a cell phone adopting the third generation communication system, i.e., whether the destination is a new model or an old model; in other words, it determines whether the destination terminal is one capable of handling a specific file.

The data determining part 102 is able to make determinations by recognizing a destination, a file format, and the presence/absence of a file described in a mail header of an e-mail, or a file format described in a header attached to each file, and the volume of data attached to the e-mail. The data determining part 102 outputs the e-mail to server communication part 104, to data processing part 103, or to mail box 105, based on these determinations.

The data processing part 103 is a part that performs the following processes: when a size of a file attached to an e-mail is not less than the predetermined size, the data processing part 103 attaches identification information indicating that the file is one with the file size not less than the predetermined size, to the header part attached to each file, in the file with the file size not less than the predetermined size; when there are a plurality of files with the file size not less than the predetermined size, the data processing part 103 leaves one file while deleting the other files with the file size not less than the predetermined size. A conceivable criterion for the data processing part 103 to delete the files is to leave only a file attached at the head and delete the other files with the file size not less than the predetermined size. The data processing part 103 also performs the following process: when an e-mail is accompanied by a file of a predetermined file type, e.g., a file that cannot be handled by portable terminal 300 (a word processing file or the like), the data processing part 103 deletes the file. After execution of these processes, the data processing part 103 outputs the e-mail with the identification information to the server communication part 104. The present embodiment adopts the configuration wherein when there are a plurality of files with the file size not less than the predetermined size, the identification information is attached to only one file, but it is also possible to adopt a confguration wherein the identification information indicating a file of not less than the predetermined size is attached to all the appropriate files.

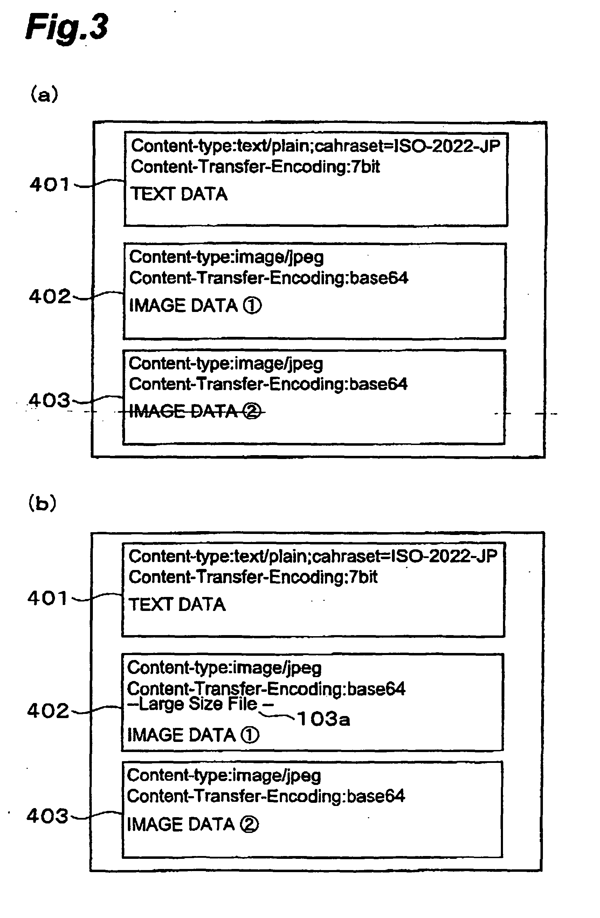

A specific example of the identification information will be described. Fig. 3 is an explanatory diagram showing a data format of an e-mail with a plurality of image data attached, wherein Fig. 3(a) is an explanatory diagram showing a data format of an e-mail received by the SMTP communication part 101 and Fig. 3(b) an explanatory diagram showing a data format of an e-mail processed by the data processing part 103.

As shown in Fig. 3(a), the e-mail is composed of text data part 401, image file part 402, and image file part 403, each of which is provided with a header part and is formed so that the data determining part 102 can recognize the contents of data on the basis of the header part. In the present embodiment, two rows of character strings attached to the text data part 401 indicate a mail header, and two rows of character strings attached to the image file part 402 and to the image file part 403 do headers attached to the respective files.

For this e-mail, the data processing part 103 describes "-Large Size File-" which is the identification information indicating that the file is not less than the predetermined size, as indicated by symbol 103a, in the file determined by the data determining part 102. As the data processing part 103 describes the identification information in the header part of the file, the receiver side receiving the e-mail with this identification information is able to determine whether the file is one not less than the predetermined size, by determining only the consistency of character strings, without determining the size of the file.

Returning to Fig. 2, the description will be continued. The server communication part 104 is a part that communicates with the external WEB server 200 and that performs transmission/reception of an e-mail by SMTP. Specifically, the server communication part 104 performs a process of transmitting an e-mail processed by the data processing part 103, or an e-mail (not processed) determined by the data determining part 102, to the external WEB server 200, and a process of receiving a return of an e-mail from the external WEB server 200 and outputting it to the mail box 105.

The mail box 105 is a part that stores e-mails and that has a storage area corresponding to each mail account (corresponding to a mail address). Each e-mail is temporarily stored in a storage area corresponding to a mail account.

The HTTP communication part 106 is a part that communicates with portable terminal 300 via dedicated network 500, and performs communication by HTTP. The central server 100 functions as a mail server through transmission/reception of e-mails by HTTP to portable terminal 300 and functions as a gateway server to the external WEB server 200 where there is a request for an image file from portable terminal 300.

Specifically, the HTTP communication part 106 takes an e-mail out of the mail box 105 and transmits the e-mail to a corresponding destination by HTTP. When the portable terminal 300 transmits an e-mail by HTTP, the HTTP communication part 106 receives it and outputs the received e-mail to the data determining part 102. The data determining part 102 performs the processing as described above. When receiving a retrieval request for an image file from the portable terminal 300 to the external WEB server 200 by HTTP, the HTTP communication part 106 performs a process of retrieving the pertinent image file from the external WEB server 200. The present embodiment is based on the configuration wherein communication is performed by HTTP when the central server 100 performs transmission/reception of an e-mail to and from the portable terminal 300, but the communication protocol is not limited to HTTP.

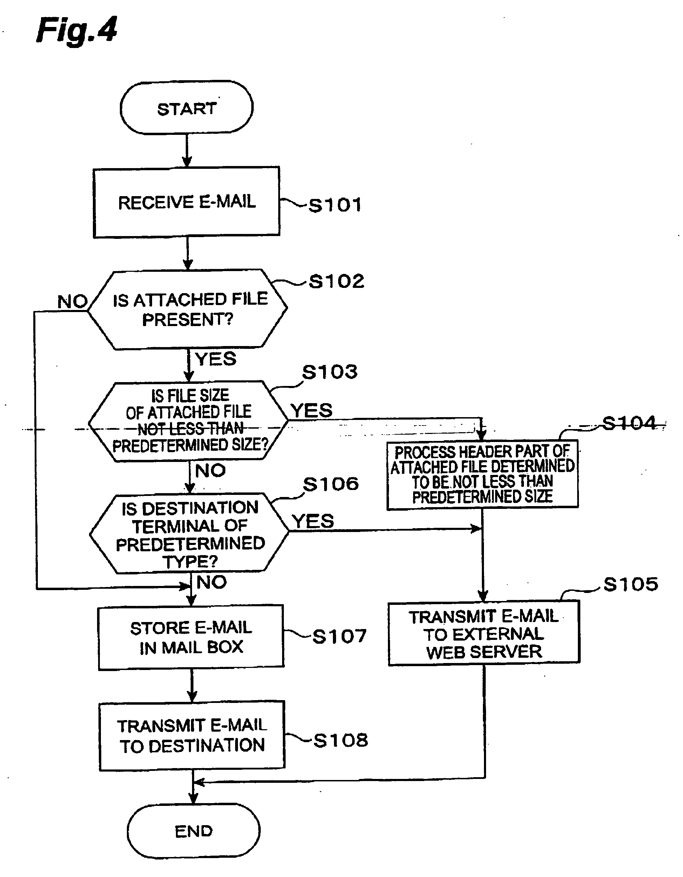

The operation of central server 100 constructed as described above will be described. Fig. 4 is a flowchart showing the operation of central server 100.

The SMTP communication part 101 receives an e-mail transmitted via the Internet (S101). The received e-mail is outputted to the data determining part 102, and the data determining part 102 determines whether a file is attached to the e-mail (S102). When the data determining part 102 determines at S 102 that no file is attached to the e-mail, it proceeds to the process of S 107 to store the e-mail in the mail box, in order to perform the normal e-mail transmitting process.

When the data determining part 102 determines at S102 that a file is attached to the e-mail, the data determining part 102 determines whether this file attachment (attached file) is one having the volume of not less than the predetermined size (S103).

When the data determining part 102 determines at S103 that the attached file is one not less than the predetermined size, the e-mail is outputted to the data processing part 103. Then the data processing part 103 adds the identification information indicating that the file is one not less than the predetermined size, to the header part of the file (a header of each file) determined to be the file of not less than the predetermined size in the e-mail (S104). If there are a plurality of files not less than the predetermined size, the files of not less than the predetermined size without the identification information will be deleted. Thereafter, the e-mail with the file having the identification information is outputted to the server communication part 104, and this e-mail is transmitted to the external WEB server 200 by the server communication part 104. If all the files are provided with the identification information, the files will not be deleted and will be transmitted by the e-mail.

When the data determining part 102 determines at S103 that the file is not one of not less than the predetermined size, the data determining part 102 determines whether the portable terminal as a destination of the e-mail is a predetermined type (e.g., an old model or a new model) (S106). When the portable terminal as the destination of the e-mail is determined to be the predetermined type (e.g., when the destination is determined to be a portable terminal incapable of handling the attached file by the e-mail), the e-mail is outputted to the server communication part 104 and transmitted to the external WEB server 200 (S105).

When it is determined at S106 that the portable terminal as the destination of the e-mail is not one of the predetermined type (e.g., when the destination is determined to be a portable terminal capable of handling the attached file by the e-mail), the e-mail is outputted to the mail box 105 and temporarily stored in the mail box 105 (S107). The e-mail stored in the mail box 105 is taken out according to a request from the HTTP communication part 106 and transmitted to the destination described in the e-mail (S108).

As described above, the e-mail is transmitted to the external WEB server 200 if the size of the attached file is not less than the predetermined size or if the destination terminal is a portable terminal of the predetermined type. The external WEB server 200 extracts only the specific attached file out of the received e-mail and stores it in association with a URL. When the destination terminal is of the predetermined type, the external WEB server 200 extracts the attached file, without recognizing the identification information, and stores it in association with a URL.

Described below is the external WEB server 200 that extracts and stores the specific attached file from the e-mail transmitted from the central server 100.

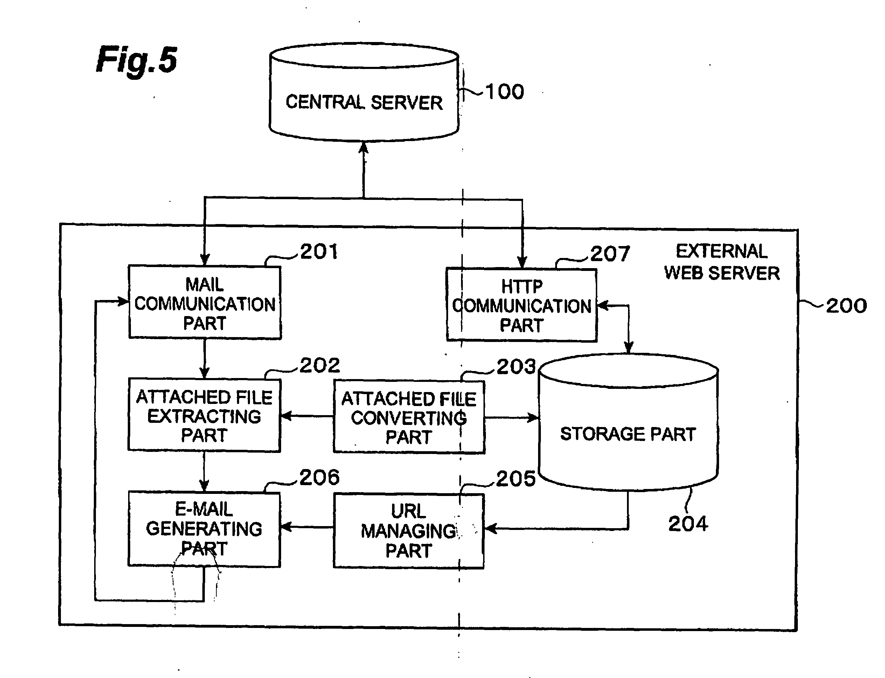

Fig. 5 is a block configuration diagram of the external WEB server 200. The external WEB server 200 is constructed including mail communication part 201 (mail transmitting/receiving means including returning means), attached file extracting part 202 (mail determining means and extracting means), attached file converting part 203, storage part 204 (storing means), URL managing part 205, e-mail generating part 206 (e-mail generating means), and HTTP communication part 207. Each of the components will be described below.

The mail communication part 201 is a part that receives an e-mail transmitted from the central server 100, by SMTP or that returns an e-mail to the central server 100 by SMTP.

The attached file extracting part 202 is a part that extracts a file with a header attached to each file, including a description of the identification information indicating that the file is one of not less than the predetermined size, out of attached files in the e-mail received from the central server 100. Specifically, the attached file extracting part 202 recognizes "--Large Size File--" as indicated by symbol 103a in Fig. 3(b), and extracts the corresponding attached file part, e.g., the image file 402 in Fig. 3(b). The attached file extracting part 202 outputs the e-mail with the attached files not extracted, to the e-mail generating part 206.

The attached file converting part 203 is a part that performs image conversion of the attached file extracted by the attached file extracting part 202. Specifically, the attached file converting part 203 is a part that performs a thinning process to reduce the file size of the attached file, and it converts the file into plural types of files so as to obtain files of plural types of different file sizes. For example, the attached file converting part 203 is able to convert an image file of 100 KByte into two types of file sizes of 10 KByte and 5 KByte.

The storage part 204 is a part that stores a file in association with a URL, and, as described hereinafter, the portable terminal 300 in access based on a designated URL with a browser is allowed to access the storage part 204 via the HTTP communication part 207 or the like and to acquire a stored file in a browsable state.

The URL managing part 205 is a part that extracts a URL indicating a storage address of a file stored in the storage part 204, from the storage part 204. The URL managing part 205 outputs the extracted URL to the e-mail generating part 206.

The e-mail generating part 206 is a part that combines the e-mail outputted from the attached file extracting part 202, with the URL outputted from the URL managing part 205 to generate an e-mail containing a description of the URL where the extracted attached file is stored. The e-mail generated here is an e-mail containing the attached file or files left without being extracted by the attached file extracting part 202. The e-mail generating part 206 outputs the generated e-mail to the mail communication part 201, in order to return the e-mail to the central server 100.

The HTTP communication part 207 is a part that extracts a file from a storage area in the storage part 204 corresponding to a URL in accordance with a file request with the designated URL from portable terminal 300 in access by HTTP via the central server 100, and transmits it to the portable terminal 300 by HTTP. This HTTP communication part 207 is able to receive a terminal type of portable terminal 300 upon reception of a file request, thereby select one appropriate file out of a plurality of files stored in different stepped file sizes, extract it from the storage part 204, and transmit it to the portable terminal 300.

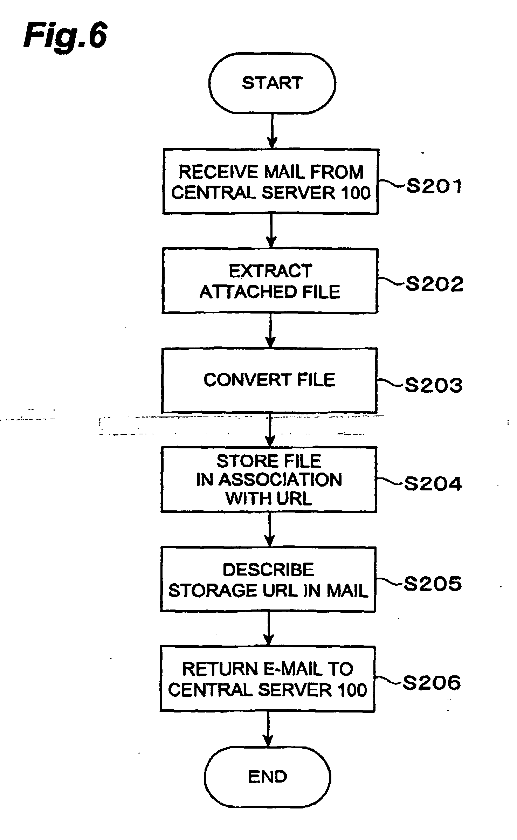

The operation of the external WEB server 200 constructed as described above will be described. Fig. 6 is a flowchart showing the operation of the external WEB server 200.

The mail communication part 201 receives an e-mail transmitted from the central server 100 (S201). The attached file extracting part 202 processes the received e-mail so as to extract a file with the identification information indicating that the file size of the file is not less than the predetermined size (S202).

The attached file converting part 203 performs the conversion of the file size to reduce the file size of the extracted file. For obtaining files of multiple file sizes, the file conversion is carried out multiple times to obtain a plurality of files (S203).

The files obtained by the conversion are stored in association with a URL in the storage part 204 (S204). For permitting access with the same URL, the files of multiple types of file sizes are associated with terminal types and file sizes in the storage part 204 and, when a file request from portable terminal 300 is received, a file according to its terminal type is selected and transmitted.

The URL managing part 205 extracts a URL indicating a storage address, and the e-mail generating part 206 describes the URL in the e-mail (S205). The e-mail as a target for the description is the e-mail which was transmitted from the central server 100 and from which the file of not less than the predetermined file size was extracted and removed. Then the e-mail with the description of the URL is outputted to the mail communication part 201 and returned to the central server 100 (S206).

In this manner, the external WEB server 200 extracts the attached file with the identification information and stores the attached file thus extracted. The external WEB server 200 generates the e-mail with the description of the URL indicating the storage address of the attached file and returns the generated e-mail to the central server 100.

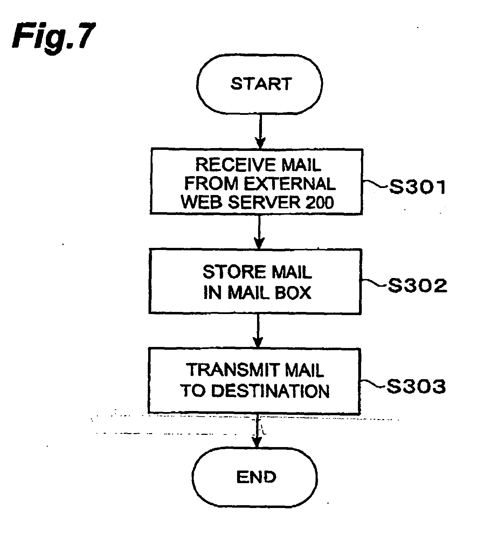

Described below is the operation of the central server 100 where the central server 100 receives the e-mail returned from the external WEB server 200. Fig. 7 is a flowchart showing the operation of the central server 100 in receiving the return mail from the external WEB server 200.

The e-mail returned from the external WEB server 200 is received by the server communication part 104 (S301). The received e-mail is temporarily stored in the mail box 105 (S302). Thereafter, the e-mail stored in the mail box 105 is transmitted to the portable terminal 300 as a destination by the HTTP communication part 106 (S303).

In this manner, the e-mail returned from the external WEB server 200 is transmitted via the central server 100 to the portable terminal 300 as a destination.

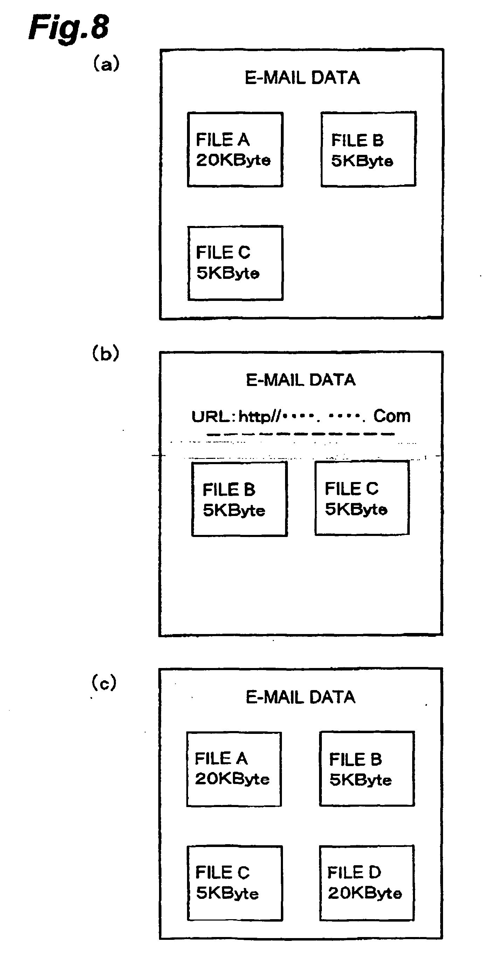

Attachment states of files attached to an e-mail will be described below. Fig. 8 is an explanatory diagram showing attachment states of attached files to an e-mail. As shown in Fig. 8(a), file A, file B, and file C are attached to an e-mail received by the central server 100. It is assumed herein that file A has the file size of 20 KByte and each of file B and file C has the file size of 5 KByte.

When the central server 100 receives such an e-mail, the file of 20 KByte is not less than 10 KByte defined as the predetermined size, and thus the e-mail is provided with the identification information described above with Fig. 3, in the header (not shown) of file A and transferred to the external WEB server 200.

In the external WEB server 200, the file A with the identification information is extracted and stored in the external WEB server 200. In the external WEB server 200, the e-mail from which file A was extracted is given a URL being a storage address of file A, as shown in Fig. 8(b), and the e-mail with the URL is returned to the central server 100.

When the central server 100 receives an e-mail as shown in Fig. 8(c), i.e., when the central server 100 receives an e-mail containing two or more files with the file size not less than the predetermined size (10 KByte or more), the central server 100 performs the process of adding the identification information to the header of one file out of the files of not less than the predetermined size and deleting the other files. In the present embodiment, the central server 100 performs a process of adding the identification information to the header of file A and deleting file D. Then the external WEB server 200 extracts and stores file A with the identification information in the same manner as described above, and returns the e-mail with the description of the URL thereof to the central server 100.

With a file of not less than the predetermined size attached to an e-mail, as described above, the central server 100 adds the identification information to the header of the file, or deletes the file, and the external WEB server 200 stores the file with the identification information and notifies the central server 100 of its URL. Thereafter, the central server 100 delivers the e-mail with the description of the URL to the portable terminal 300.

The following will describe the action and effect of the central server 100 of the present embodiment, and the communication system using the central server 100 and the external WEB server 200.

The central server 100 of the present embodiment performs the following storage, based on a file size of a file attached to an e-mail: when the file size is smaller than the predetermined size (e.g., 10 KByte), the e-mail, together with the attached file; is stored as a normal e-mail in the storage area specified by its e-mail address, i.e., in the mail box 105; when the file size is not less than the predetermined size, the file is stored in the storage area specified by a URL, i.e., in the storage part 204 of the external WEB server 200. This permits the portable terminal 300 to acquire the attached file with the file size that cannot be received with the e-mail, through the use of a browser, and thus the central server 100 permits the receiver to securely acquire the attached file.

When the SMTP communication part 101 receives an e-mail with a plurality of files attached and when the data determining part 102 determines that there is at least one attached file with the file size not less than the predetermined size among the plurality of files, the central server 100 performs the process of adding the identification information to the e-mail by the data processing part 103, so as to make the external WEB server 200 store the file in the storage part 204 specified by the URL. This permits the following process even in the case where a plurality of files are attached to an e-mail: the files are stored according to their file size in the storage part 204 specified by the URL in the external WEB server 200, or stored in the mail box 105 to be sent with the e-mail by the HTTP communication part 106, whereby the attached files can be securely sent to the destination.

The central server 100 of the present embodiment may be arranged so that the data processing part 103 performs the following processing: when a plurality of files are attached to an e-mail received by the SMTP communication part 101, only one file is stored in the storage part 204 specified by a URL and the other files of not less than the predetermined size are deleted. In this case, the user manipulating the communication terminal to browse the file stored in the storage part 204 specified by the URL does not have to perform selection of the URL or the like, which can improve the operability for file browsing.

## Claims

1. A server system comprising a central server (100) for receiving an e-mail with a file attached thereto and for transmitting the e-mail to a communication terminal (300), and a WEB server (200) having a storage area for storing the attached file in association with a URL,
wherein
the central server (100) comprises:
size determining means (102) for determining a file size of the file attached to the e-mail received;
processing means (103) for, when the size determining means (102) determines that the file size of the file is not less than a predetermined file size, providing the e-mail with identification information indicating that the file size of the file is not less than the predetermined file size;
server transmitting means (104) for transmitting the e-mail processed by the processing means, to the WEB server; and
terminal transmitting means (106) for transmitting an e-mail returned from the WEB server, to the communication terminal, and wherein the WEB server (200) comprises:
mail determining means (202) for determining whether an e-mail transmitted from the central server is provided with the identification information indicating that the file size is not less than the predetermined file size;
extracting means (202) for, when the mail determining means (202) determines that the e-mail contains a file with a file size not less than the predetermined file size, extracting the file;
storing means (204) for storing the file extracted by the extracting means, in association with a URL;
e-mail generating means (206) for generating an e-mail by describing the URL associated with the file in the storing means (204), in the e-mail transmitted from the central server (100) and from which the file was extracted; and
returning means (201) for returning the e-mail generated by the e-mail generating means (206), to the central server (100),
wherein said WEB server (200) is adapted to enable to transmit the file stored in said storing means (204), according to a request transmitted from said communication terminal (300) without said central server (100) along the path.

2. The server system according to claim 1,
wherein when the central server (100) receives an e-mail with a plurality of files attached thereto and when it is determined by the size determining means (102) that a file size of at least one file out of the plurality of files received is not less than the predetermined file size,
the terminal transmitting means (106) is adapted to transmit to the communication terminal, information indicating a URL, along with the files other than the file with the file size not less than the predetermined file size, by the e-mail.

3. The server system according to Claim 2, wherein when it is determined by the size determining means (102) that a plurality of files with the file size not less than the predetermined file size are attached to the e-mail received by the central server (100),
the processing means (103) is adapted to leave only one file out of the plurality of files with the file size not less than the predetermined file size and to delete the other files with the file size not less than the predetermined file size from the e-mail.

4. An e-mail delivery method for a server system comprising a central server for receiving an e-mail with a file attached thereto and for transmitting the e-mail to a communication terminal, and a WEB server having a storage area for storing the attached file in association with a URL, wherein the central server performs the following steps:
a size determining step (S103) of determining a file size of the file attached to the received e-mail;
a processing step (S104) wherein when it is determined in the size determining step that the file size of the file is not less than a predermined file size the e-mail is provided with identification information indicating that the file size of the file is not less than the predetermined file size
a server transmitting step (S105) for transmitting the e-mail processed in the processing step, to a WEB server; and
a terminal transmitting step (S303) for transmitting an e-mail returned from the WEB server, to the communication terminal, and performing at a WEB server:
a mail determining step (S202) for determining whether an e-mail transmitted from the central server is provided with the identification information indicating that the file size is not less than the predetermined file size;
an extracting step (S202) for, when it is determined in the mail determining step (S202) that the e-mail contains a file with a file size not less than the predetermined file size, extracting the file;
a storing step (S204) for storing the file extracted in the extracting step (S202), in association with a URL;
an e-mail generating step (S205) for generating an e-mail by describing the URL associated with the file in the storing step (S204), in the e-mail transmitted from the central server and from which the file was extracted; and
a returning step (S206) for returning the e-mail generated in the e-mail generating step (S205), to the central server (100),
wherein said WEB server (200) transmits the file stored in said storing step (S204), according to a request transmitted from said communication terminal (300) without said central server along the path.

## Patentansprüche

1. Serversystem, welches einen zentralen Server (100) zum Empfang einer E-Mail mit einer angehängten Datei und zum Senden der E-Mail an eine Kommunikationsendstelle (300) und einen Web-Server (200) umfasst, der einen Speicherbereich zum Speichern der angehängten Datei in Verbindung mit einer URL-Adresse aufweist, wobei der zentrale Server (100) das Folgende umfasst:
Größenbestimmungsmittel (102) zum Bestimmen der Dateigröße der Datei, die an die empfangene E-Mail angehängt ist;
Verarbeitungsmittel (103), um dann, wenn das Größenbestimmungsmittel (102) bestimmt, dass die Dateigröße der Datei nicht kleiner als eine vorgegebene Dateigröße ist, die E-Mail mit Identifikationsinformationen zu versehen, die anzeigen, dass die Dateigröße der Datei nicht kleiner als die vorgegebene Dateigröße ist;
Server-Sendemittel (104) zum Senden der von dem Verarbeitungsmittel verarbeiteten E-Mail an den Web-Server; und
Endstellen-Sendemittel (106) zum Senden einer von dem Web-Server zurückgesendeten E-Mail an die Kommunikationsendstelle, und wobei der Web-Server (200) das Folgende umfasst:
Mail-Bestimmungsmittel (202) zum Bestimmen, ob eine von dem zentralen Server gesendete E-Mail mit den Identifikationsinformationen versehen ist, die anzeigen, dass die Dateigröße nicht kleiner als die vorgegebene Dateigröße ist;
Abrufmittel (202) um dann, wenn das Mail-Bestimmungsmittel (202) bestimmt, dass die E-Mail eine Datei einer Dateigröße enthält, die nicht kleiner als die vorgegebene Dateigröße ist, die Datei abzurufen;
Speichermittel (204) zum Speichern der Datei, die durch das Abrufmittel abgefragt wurde, in Verbindung mit einer URL-Adresse;
E-Mail-Erstellungsmittel (206) zum Erstellen einer E-Mail durch Beschreiben der URL-Adresse, die in dem Speichermittel (204) mit der Datei verbunden ist, in der E-Mail, die von dem zentralen Server (100) gesendet wurde und von welcher die Datei abgerufen wurde; und
Rücksendemittel (201) zum Zurücksenden der von dem E-Mail-Erstellungsmittel (206) erstellten E-Mail an den zentralen Server (100),
wobei der Web-Server (200) dafür geeignet ist, zu ermöglichen, dass die Datei, die in dem Speichermittel (204) gespeichert ist, gemäß einer von der Kommunikationsendstelle (300) gesendeten Anforderung gesendet wird, ohne dass sich der zentrale Server (100) auf dem Sendeweg befindet.

2. Serversystem nach Anspruch 1,
wobei dann, wenn der zentrale Server (100) eine E-Mail mit mehreren angehängten Dateien empfängt und wenn durch das Größenbestimmungsmittel (102) bestimmt wird, dass die Dateigröße mindestens einer Datei der mehreren empfangenen Dateien nicht kleiner als die vorgegebene Dateigröße ist,
das Endstellen-Sendemittel (106) dafür geeignet ist, mit der E-Mail an die Kommunikationsendstelle zusammen mit den anderen Dateien außer der Datei der Dateigröße, die nicht kleiner als die vorgegebene Dateigröße ist, Informationen zu senden, die eine URL-Adresse anzeigen.

3. Serversystem nach Anspruch 2, wobei dann, wenn durch das Größenbestimmungsmittel (102) bestimmt wird, dass mehrere Dateien der Dateigröße, die nicht kleiner als die vorgegebene Dateigröße ist, an die von dem zentralen Server (100) empfangene E-Mail angehängt sind, das Verarbeitungsmittel (103) dafür geeignet ist, nur eine Datei der mehreren Dateien der Dateigröße, die nicht kleiner als die vorgegebene Dateigröße ist, zu belassen und die anderen Dateien der Dateigröße, die nicht kleiner als die vorgegebene Dateigröße ist, aus der E-Mail zu löschen.

4. E-Mail-Verteilungsverfahren für ein Serversystem, welches einen zentralen Server zum Empfang einer E-Mail mit einer angehängten Datei und zum Senden der E-Mail an eine Kommunikationsendstelle und einen Web-Server umfasst, der einen Speicherbereich zum Speichern der angehängten Datei in Verbindung mit einer URL-Adresse aufweist, wobei der zentrale Server die folgenden Schritte durchführt:
einen Größenbestimmungsschritt (S103) des Bestimmens einer Dateigröße der an die empfangene E-Mail angehängten Datei;
einen Verarbeitungsschritt (S104), wobei dann, wenn in dem Größenbestimmungsschritt bestimmt wird, dass die Dateigröße der Datei nicht kleiner als eine vorgegebene Dateigröße ist, die E-Mail mit Identifikationsinformationen versehen wird, die anzeigen, dass die Dateigröße der Datei nicht kleiner als die vorgegebene Dateigröße ist;
einen Server-Sendeschritt (S105) zum Senden der in dem Verarbeitungsschritt verarbeiteten E-Mail an den Web-Server; und
einen Endstellen-Sendeschritt (S303) zum Senden einer von dem Web-Server zurückgesendeten E-Mail an die Kommunikationsendstelle, und
wobei an einem Web-Server das Folgende durchgeführt wird:
ein Mail-Bestimmungsschritt (S202) zum Bestimmen, ob eine von dem zentralen Server übertragene E-Mail mit den Identifikationsinformationen versehen ist, die anzeigen, dass die Dateigröße nicht kleiner als die vorgegebene Dateigröße ist;
ein Abrufschritt (S202) um dann, wenn in dem Mail-Bestimmungsschritt (S202) bestimmt wird, dass die E-Mail eine Datei einer Dateigröße enthält, die nicht kleiner als die vorgegebene Dateigröße ist, die Datei abzurufen;
ein Speicherungsschritt (S204) zum Speichern der Datei, die in dem Abrufschritt (S202) abgefragt wurde, in Verbindung mit einer URL-Adresse;
ein E-Mail-Erstellungsschritt (S205) zum Erstellen einer E-Mail durch Beschreiben der URL-Adresse, die in dem Speicherungsschritt (S204) mit der Datei verbunden wurde, in der E-Mail, die von dem zentralen Server gesendet wurde und von welcher die Datei abgerufen wurde; und
ein Rücksendeschritt (S206) zum Zurücksenden der in dem E-Mail-Erstellungsschritt (S205) erstellten E-Mail an den zentralen Server (100),
wobei der Web-Server (200) die in dem Speicherungsschritt (S204) gespeicherte Datei gemäß einer von der Kommunikationsendstelle (300) gesendeten Anforderung sendet, ohne dass sich der zentrale Server auf dem Sendeweg befindet.

## Revendications

1. Système serveur comprenant un serveur central (100) pour recevoir un email avec un fichier attaché à celui-ci et pour transmettre l'e-mail à un terminal de communication (300), et un serveur WEB (200) ayant une zone de stockage pour stocker le fichier attaché en association avec une URL,
dans lequel
le serveur central (100) comprend :
un moyen de détermination de taille (102) pour déterminer une taille de fichier du fichier attaché à l'e-mail reçu ;
un moyen de traitement (103) pour, lorsque le moyen de détermination de taille (102) détermine que la taille de fichier du fichier n'est pas inférieure à une taille de fichier prédéterminée, distribuer l'e-mail avec des informations d'identification indiquant que la taille de fichier du fichier n'est pas inférieure à la taille de fichier prédéterminée ;
un moyen de transmission de terminal (104) pour transmettre l'e-mail traité par le moyen de traitement, au serveur WEB ; et
un moyen de transmission de terminal (106) pour transmettre un e-mail retourné à partir du serveur WEB, au terminal de communication, et dans lequel le serveur WEB (200) comprend :
un moyen de détermination de mail (202) pour déterminer si un e-mail transmis à partir du serveur central est pourvu d'informations d'identification indiquant que la taille de fichier n'est pas inférieure à la taille de fichier prédéterminée ;
un moyen d'extraction (202) pour, lorsque le moyen de détermination de mail (202) détermine que l'e-mail contient un fichier avec une taille de fichier non inférieure à la taille du fichier prédéterminée, extraire le fichier ;
un moyen de stockage (204) pour stocker le fichier extrait par le moyen d'extraction, en association avec une URL ;
un moyen de génération d'e-mail (206) pour générer un e-mail en décrivant l'URL associée au fichier dans le moyen de stockage (204), dans l'e-mail transmis à partir du serveur central (100) et à partir duquel le fichier était extrait ; et
un moyen de retour (201) pour retourner l'e-mail généré par le moyen de génération d'e-mail (206), au serveur central (100),
dans lequel ledit serveur WEB (200) est adapté pour permettre la transmission du fichier stocké dans ledit moyen de stockage (204), selon une demande transmise par ledit terminal de communication (300) sans ledit serveur central (100) le long du chemin.

2. Système serveur selon la revendication 1,
dans lequel lorsque le serveur central (100) reçoit un e-mail avec une pluralité de fichiers attachés à celui-ci et lorsqu'il est déterminé par le moyen de détermination de taille (102) qu'une taille de fichier d'au moins un fichier parmi la pluralité de fichiers reçus n'est pas inférieure à la taille de fichier prédéterminée,
le moyen de transmission de terminal (106) est adapté pour transmettre au terminal de communication, des informations indiquant une URL, ainsi que les fichiers autres que le fichier avec la taille de fichier non inférieure à la taille de fichier prédéterminée, par l'e-mail.

3. Système serveur selon la revendication 2, dans lequel lorsqu'il est déterminé par le moyen de détermination de taille (102) qu'une pluralité de fichiers avec la taille de fichier non inférieure à la taille de fichier prédéterminée sont attachés à l'e-mail reçu par le serveur central (100),
le moyen de traitement (103) est adapté pour laisser seulement un fichier parmi la pluralité de fichiers avec la taille de fichier non inférieure à la taille de fichier prédéterminée et pour effacer les autres fichiers avec la taille de fichier non inférieure à la taille de fichier prédéterminée à partir de l'e-mail.

4. Procédé de distribution d'un e-mail pour un système de serveur comprenant un serveur central pour recevoir un e-mail avec un fichier attaché à celui-ci et pour transmettre l'e-mail à un terminal de communication, et un serveur WEB ayant une zone de stockage pour stocker le fichier attaché en association avec une URL, dans lequel le serveur central réalise les étapes suivantes :
une étape de détermination de taille (S103) de détermination d'une taille de fichier du fichier attaché à l'e-mail reçu ;
une étape de traitement (S104) dans lequel lorsqu'il est déterminé dans l'étape de détermination de taille que la taille de fichier du fichier n'est pas inférieure à une taille de fichier prédéterminée, l'e-mail est pourvu d'informations d'identification indiquant que la taille de fichier du fichier n'est pas inférieure à la taille de fichier prédéterminée
une étape de transmission de serveur (S105) pour transmettre l'e-mail traité dans l'étape de traitement, à un serveur WEB ; et
une étape de transmission de terminal (S303) pour transmettre un e-mail retourné à partir du serveur WEB, au terminal de communication, et réalisation sur un serveur WEB ;
une étape de détermination de mail (S202) pour déterminer si un e-mail transmis à partir du serveur central est pourvu d'informations d'identification indiquant que la taille de fichier n'est pas inférieure à la taille de fichier prédéterminée ;
une étape d'extraction (S202) pour, lorsqu'il est déterminé dans l'étape de détermination de mail (S202) que l'e-mail contient un fichier avec une taille de fichier non inférieure à la taille de fichier prédéterminée, extraire le fichier ;
une étape de stockage (S204) pour stocker le fichier extrait dans l'étape d'extraction (S202), en association avec une URL ;
une étape de génération d'e-mail (S205) pour générer un e-mail en décrivant l'URL associée au fichier dans l'étape de stockage (S204), dans l'e-mail transmis à partir du serveur central et à partir duquel la taille de fichier était extraite, et
une étape de retour (S206) pour retourner l'e-mail généré dans l'étape de génération d'e-mail (S205), au serveur central (S100),
dans lequel ledit serveur WEB (200) transmet le fichier stocké dans ladite étape de stockage (S204), selon une demande transmise à partir dudit terminal de communication (300) sans ledit serveur central le long du chemin.
